# EUROPEAN PATENT APPLICATION

(11) **EP 1 654 933 A1**
(43) Date of publication of application: **10.05.2006**
(21) Application number: 05380239.3
(22) Date of filing: 28.10.2005
(51) Int. Cl.: A23B 7/16, A23B 7/154, A23B 9/14, A23L 1/212

(54) **Edible coating for fruits and vegetables**

(30) Priority: 03.11.2004 ES 200402642
(71) Applicant: Fomesa Fruitech, S.L., 46469 Beniparrell (Valencia) (ES)
(72) Inventor: Conesa Roca, Ernesto, 46469 Beniparrell (valencia) (ES)
(74) Representative: Canadell-Isern, Roberto

(57) **Abstract**

The object of this Patent is an Edible coating for fruits and vegetables, whose use is explained in the description of the invention.

The preferred percent composition of its formulation is as follows:

| | |
|---|---|
| Starch derivatives | 2.5 to 25 % |
| Proteins | 0.5 to 5 % |
| Cellulose derivatives | 0.5 to 5 % |
| Coadjutants | 0.5 to 5 % |
| Water | (rest) |

## Description

### OBJECT

The object of the invention that is protected by this Patent is an "Edible coating for fruits and vegetables".

### BACKGROUND

The use of coatings on fruits and vegetables is a widely used technique that helps to keep them looking fresh and lengthen their preservation time by preventing the rot, dehydration and senescense that leads to tissue aging and death.

The first operation of the treatment process usually consists of eliminating foreign matter from the vegetable products, for which purpose they are usually washed with water and detergent. This operation inevitably removes part of the natural wax, which accelerates weight loss by transpiration and the resulting aspectual decay.

To detain this process, what is done is to apply a coat by spraying which can restore to the fruit the wax layer lost during washing and thereby reduce weight loss by dehydration, prevent them from getting soft and wrinkled, and improve their appearance by making them shinier. At the same time, spraying can be a way to apply phyto-sanitary preparations.

In all cases, the applied products are, or are composed of, authorized food additives (Directive 95/2/CE) that are deposited on the surface of fruits or vegetables whose skin is ordinarily removed before consumption, as in the case of citrus fruits, and therefore the coatings have no direct influence on the nourishment process.

However there are other fruits (apples) or vegetables (peppers, zucchini, eggplant) that can be optionally consumed with skin, which means that in these cases products are ingested with coatings that, though authorized, are not always or totally natural.

### DESCRIPTION OF THE INVENTION.

The purpose of the invention that is the object of this Patent is to replace the chemical products that are the standard components of coatings applied to fruits and vegetables, according to the state of the art, with other purely natural food products.

The food replacements for the autorized food additives used up to now effectively cover the same functions attributed to the latter, i.e. surface protection of treated fruits and vegetables to prevent weight loss by transpiration and improve their aspectual traits (color, shine, texture) so as to stimulate the desire to purchase by potential buyers.

The future of food packaging is the edible film because these films offer quite a few advantages, e.g. they can be consumed together with the food product, there is no packaging waste, they can add nutritional value to or enhance the organoleptic qualities of the food product, and also they can be used as individual wrappings of small elements such as strawberries, peas, etc., form internal barriers between different phases of the same food product and be a vehicle for additives.

Moreover, they can be applied by the standard procedures that are normally used (automatic dosed spray).

In general, the food products used as edible coatings for fruits and vegetables are classified by type: hydrocolloids, lipids, and composites or a combination of the two.

Hydrocolloids are characterized by the fact that they form a good barrier for oxygen and carbon dioxide and have good mechanical properties, but on the contrary they do not sufficiently impede the passage of water vapor. This group includes the polysaccharides (cellulose and derivatives, starch and derivatives, pectins, alginates, etc.) and proteins.

Lipids form a good barrier against the passage of water vapor, thus reducing transpiration and dehydration and improving the fruit's shine, but they form very fragile films that generally need a support matrix. The lipids include waxes, glycerol esters and fatty acids.

A composite is defined as the mixture of hydrocolloids and lipids, where the aim is to take advantage of the properties of each group and compensate for their deficiencies. In general the lipids provide resistance to water vapor, and the hydrocolloids selective permeability to carbon dioxide and oxygen and the mechanical properties of the film.

Films prepared on the basis of polysaccharides (starch and cellulose) form strong films but are a poor barrier to water vapor due to their hydrophilic nature, whereas protein films are also poor barriers against water vapor but on the other hand are good barriers to oxygen and carbon dioxide. Lipids have a good compatibility with other film forming agents and, because of their good resistance to the transmission of water vapor and oxygen, their use in edible films is creasing. However, composites are the materials most widely used for food in general.

### DESCRIPTION OF A PREFERRED EXECUTION.

Whereas the object of this Patent is an edible coating, the generic components of which are described above, the formulation thereof for its preferred execution must be specified, although establishing a certain margin of admissible percent variation for each component in order to provide for empirical adaptation to the inherent traits of each homogeneous group of fruits or vegetables to be treated.

In accordance with this, a preferred formulation of the claimed edible coating includes the following:

| | |
|---|---|
| Starch derivatives | 2.5 to 25 % |
| Proteins | 0.5 to 5 % |
| Cellulose derivatives | 0.5 to 5 % |
| Coadjutants | 0.5 to 5 % |
| Water | (rest) |

## Claims

1. ^{**a**}- Edible coating for fruits and vegetables, **characterized by** the preferred percent composition of its formulation, which is as follows:
| | |
|---|---|
| Starch derivatives | 2.5 to 25 % |
| Proteins | 0.5 to 5 % |
| Cellulose derivatives | 0.5 to 5 % |
| Coadjutants | 0.5 to 5 % |
| Water | (rest) |
